# EUROPEAN PATENT APPLICATION

(11) **EP 2 800 004 A1**
(43) Date of publication of application: **05.11.2014**
(21) Application number: 14165614.0
(22) Date of filing: 20.05.2010
(51) Int. Cl.: G06F 13/40, G06F 13/42, G06F 1/12, H04L 7/04

(54) **Synchronous network of superspeed and non-superspeed USB devices**

(30) Priority: 20.05.2009 US 179904 P
(62) Divisional of application: 10777233.7
(71) Applicant: Chronologic Pty Limited, Adelaide, South Australia 5000 (AU)
(72) Inventor: Foster, Peter Graham, Kent Town South Australia 5067 (AU)
(74) Representative: Davies, Robert Ean

(57) **Abstract**

A method of synchronising the operation of a plurality of SuperSpeed USB devices and a plurality of non-SuperSpeed USB devices, the method comprising: establishing a SuperSpeed synchronisation channel for each of the plurality of SuperSpeed USB devices; establishing a non-SuperSpeed synchronisation channel for each of the plurality of non-SuperSpeed USB devices; synchronising a respective local clock of each of the plurality of SuperSpeed USB devices; synchronising a respective local clock of each of the plurality of non-SuperSpeed USB devices; and synchronising the SuperSpeed and non-SuperSpeed synchronisation channels so that the SuperSpeed and non-SuperSpeed devices can operate in synchrony.

## Description

### FIELD OF THE INVENTION

The present invention relates to a method and apparatus for providing a synchronization and timing system, with connectivity based on revision three of the Universal Serial Bus (USB) architecture (or USB 3.0), of particular but by no means exclusive use in providing clocks, data acquisition and automation and control of test and measurement equipment, instrumentation interfaces and process control equipment, synchronized to an essentially arbitrary degree in either a local environment or in a distributed scheme.

### BACKGROUND OF THE INVENTION

The USB specification up to and including revision 2.0 was intended to facilitate the interoperation of devices from different vendors in an open architecture. High Speed USB data is encoded using differential signalling (*viz.* in which two wires transfer the information) in the form of the difference between the signal levels of those two wires. The USB 2.0 specification is intended as an enhancement to the PC architecture, spanning portable, desktop and home environments.

However, USB was user focussed so the USB 2.0 specification lacked a mechanism for synchronising devices to any great precision. Several proposals attempted to address this and other deficiencies. For example, US Patent No. 6,343,364 (Leydier et al.) discloses an example of frequency locking to USB traffic, which is directed toward a smart card reader. This document teaches a local, free-running clock that is compared to USB SYNC and packet ID streams; its period is updated to match this frequency, resulting in a local clock with a nominal frequency of 1.5 MHz. This provides a degree of synchronization sufficient to read smart card information into a host PC but, as this approach is directed to a smart card reader, inter-device synchronization is not addressed.

WO 2007/092997 (Foster et al.) discloses a synchronized USB device that allows the generation of accurate clock frequencies on board the USB device regardless of the accuracy of the clock in the Host PC. The USB SOF packet is decoded by the USB device, and treated as a clock carrier signal instead of acting as a clock reference.

The carrier signal, once decoded from the USB traffic, is combined with a scaling factor to generate synchronization information and hence to synthesize a local clock signal with precise control of the clock frequency. In this way, the frequency of the local clock signal can be more accurate than the somewhat ambiguous frequency of the carrier signal.

This arrangement is said to be able to produce a local clock signal to arbitrarily high frequencies, such as a clock frequency of tens of megahertz, and thus to ensure that the local clock of each device connected to a given USB is synchronized in frequency. US Application No. 10/620,769 also teaches a method and apparatus to further synchronize multiple local clocks in phase by measurement of signal propagation time from the host to each device and provision of clock phase compensation on each of the USB devices.

US Patent Application 12/279,328 (Foster *et. al*.) teaches synchronisation of the local clocks of a plurality of USB devices to a timebase received from another interface. In one embodiment, a USB device contains a local clock that is synchronised to an externally provided time signature across Ethernet using the IEEE-1588 protocol. In yet another embodiment the USB device's clock is synchronised to a timebase derived from a Global Positioning System (GPS) synchronised clock.

All of the above systems work within the bounds of conventional USB 2.0 and as such are limited in several areas. USB 2.0 is limited in range by the device response timeout. This is the window of time that the USB Host Controller allocates for receipt of a signal from a given USB device in response to a request from said USB Host Controller. The physical reach of USB 2.0 is therefore approximately 25 m.

The USB 3.0 specification was released in November 2008 and is also focussed on consumer applications. The USB 3.0 specification makes significant changes to the architecture of USB. In particular, the background art synchronisation schemes discussed above will not work with the new 5 Gb/s protocol (termed 'SuperSpeed USB') because it does away with the broadcast mechanism for SOF packets.

USB 3.0 defines two parallel and independent USB busses on the same connection cable.

Firstly, the USB 2.0 bus remains unchanged (for backward compatibility) and offers Low Speed (1.5 Mb/s), Full Speed (12 Mb/s) and High Speed (480 Mb/s) protocols. The second bus - for 5 Gb/s traffic - provides the SuperSpeed USB. These busses operate independently, except that operation of the busses to a given USB device is mutually exclusive. That is, if a SuperSpeed connection is possible, then the USB 2.0 bus in disconnected to that device.

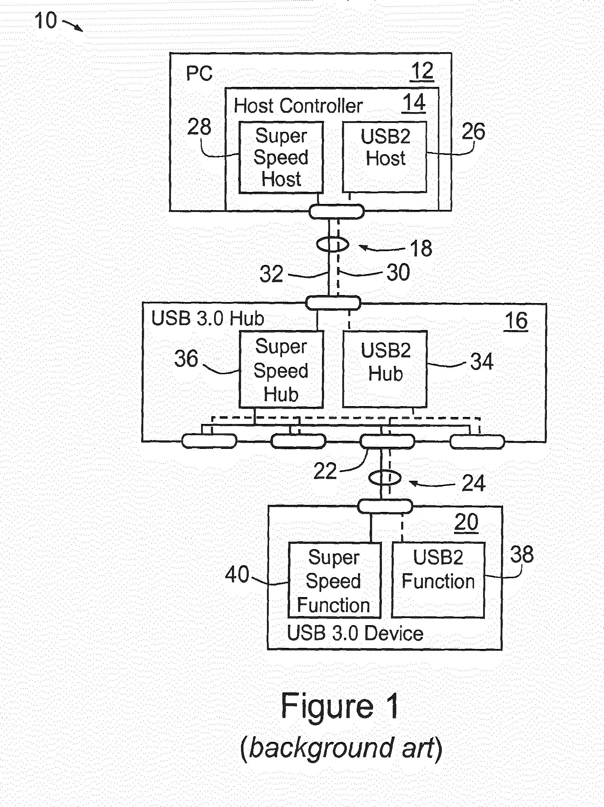

The dual-bus architecture of USB 3.0 is depicted schematically at 10 in figure 1. Personal Computer 12, containing USB Host Controller 14, is connected to USB 3.0 Hub 16 by first USB 3.0-compliant cable 18; USB 3.0 device 20 is connected to a downstream port 22 of USB 3.0 Hub 16 by second USB 3.0-compliant cable 24.

USB Host Controller 14 contains both a USB 2.0 Host 26 and a SuperSpeed Host 28. These two hosts 26, 28 are independent of one another, and each host 26, 28 is capable of connecting up to 127 devices (including hubs). USB 3.0-compliant cables are compound cables, containing a USB 2.0-compliant cable and a series of shielded conductors capable of transmitting SuperSpeed signals. Hence, USB 3.0-compliant cable 18 comprises USB 2.0-compliant cable 30 and shielded conductors 32.

USB 3.0 Hub 16 contains both a USB 2.0 Hub function 34 and a SuperSpeed Hub function 36, each connected directly to its respective Host 26, 28 by compound cable 18. USB 3.0 device 20 contains both a USB 2.0 device function 38 and a SuperSpeed device function 40, each connected back to its respective hub function 34, 36 of USB 3.0 Hub 16 by compound cable 24.

At enumeration of USB 3.0 device 20, SuperSpeed Host 28 checks for the presence of a SuperSpeed device function (40). If a SuperSpeed device is found, then a connection is established. If a SuperSpeed device is not found (as in the case where only a USB 2.0 device is connected to port 22), then the USB 2.0 Host 26 checks for the presence of a USB 2.0 device function (38) at device 20. Once the Host Controller 14 determines which device function is connected, it tells the USB 3.0 Hub 16 to only enable communication for downstream port 22 corresponding to whether the USB 2.0 device function 38 or SuperSpeed device function 40 is attached. This means that only one of the two parallel busses is in operation at any one time to an end device such as USB 3.0 device 20.

Furthermore, SuperSpeed USB has a different architecture from that of the USB 2.0 bus. Very high speed communication systems consume large amounts of power owing to high bit rates. A design requirement of SuperSpeed USB was lower power consumption, to extend the battery life of user devices. This has resulted in a change from the previous broadcast design of the USB 2.0: SuperSpeed is not a broadcast bus, but rather directs communication packets to a specific node in the system and shuts down communication on idle links.

This significantly affects any extension of the synchronisation schemes of, for example, US Patent Application No. 12/279,328, whose method and apparatus for synchronising devices is based on a broadcast clock carrier signal that is delivered to each device on the bus, which is unsuitable in SuperSpeed USB.

A SuperSpeed Hub function acts as a device to the host (or upstream port) and as a host to the device (or downstream port). This means that the SuperSpeed Hub function acts to buffer and schedule transactions on its downstream ports rather than merely acting as a repeater. Similarly, the SuperSpeed Hub function does so with scheduling transmissions on the upstream port. A heavily burdened Hub function can therefore add significant non-deterministic delays in packet transmission through the system. This also precludes the use of USB 2.0 synchronisation schemes such as that of US Patent Application No. 12/279,328 from operating on SuperSpeed USB.

The crude Isochronous synchronisation of USB 2.0 has been significantly improved in the USB 3.0 specification. Opening an Isochronous communication pipe between a Host Controller and a USB device guarantees a fixed bandwidth allocation in each Service Interval for the communication pipe. The Isochronous Protocol of USB 3.0 contains a so-called Isochronous Timestamp Packet (ITP), which is sent at somewhat regular intervals to each Isochronous Endpoint and which contains a timestamp of the beginning of ITP transmission by the USB Host Physical Layer (Phy) in the time domain of the Host Controller. The Isochronous Timestamp Packet is accurate to about 25 ns. SuperSpeed USB shuts down idle links to conserve power, but links must be active in order to receive an Isochronous Timestamp Packet. The Host Controller must therefore guarantee that all links to a device are in full active mode (termed power state U0) before transmission of the Isochronous Timestamp Packet.

Unfortunately the Isochronous Timestamp packet can be delayed in propagation down the USB network. USB 3.0 also does not provide a way of determining the propagation time of packets in SuperSpeed USB and hence no way of accurately knowing the phase relationship between time domains on different USB devices. Phase differences of several hundred nanoseconds are expected to be a best case scenario with SuperSpeed USB making it impractical for instrumentation or other precision timing requirements.

US Patent No. 5,566,180 (Eidson et al.) discloses a method of synchronising clocks in which a series of devices on a communication network transmit their local time to each other and network propagation time is determined by the ensemble of messages. Further disclosures by Eidson (US Patents Nos. 6,278,710, 6,665,316, 6,741,952 and 7,251,199) extend this concept but merely work toward a synchronisation scheme in which a constant stream of synchronising messages are transferred between each of the nodes of a distributed instrument network via Ethernet. This continual messaging consumes bandwidth and limits the accuracy of the possible synchronisation to several hundred nano-seconds in a point-to-point arrangement and substantially lower accuracy (typically micro-seconds) in a conventional switched subnet.

It should be understood that the terms 'clock signals' and 'synchronisation' in this disclosure are used to refer to clock signals, trigger signals, delay compensation information and propagation time measurement messages. It should also be understood that a 'notion of time' in this disclosure is used to denote an epoch or 'real time' and can also be used to refer to the combination of a clock signal and an associated epoch.

### SUMMARY OF THE INVENTION

It is a general object of the present invention to enable precision synchronisation of a plurality USB devices, up to a predefined maximum, according to the USB3 Specification.

Specifically, the invention provides, in a first broad aspect, a method of synchronising the operation of a plurality of SuperSpeed USB devices and a plurality of non-SuperSpeed USB devices, comprising:
establishing a SuperSpeed synchronisation channel for each of the plurality of SuperSpeed USB devices;
establishing a non-SuperSpeed synchronisation channel for each of the plurality of non-SuperSpeed USB devices;
synchronising a respective local clock of each of the plurality of SuperSpeed USB devices;
synchronising a respective local clock of each of the plurality of non-SuperSpeed USB devices; and
synchronising the SuperSpeed and non-SuperSpeed synchronisation channels so that the SuperSpeed and non-SuperSpeed devices can operate in synchrony.

Thus, the invention allows synchronous operation of SuperSpeed connected USB devices and non-SuperSpeed connected USB devices on a common USB.

Thus, this approach allows synchronisation of for example SuperSpeed-Isochronous timing with non-SuperSpeed (or high speed) SOF timing.

In one embodiment the method comprises syntonising or frequency locking the local clocks of each of the SuperSpeed USB devices using an Isochronous transfer method, the Isochronous transfer method comprising:
opening at least one Isochronous communication pipe between the Host Controller and the respective SuperSpeed USB device;
ensuring that the respective SuperSpeed USB device is in link state U0 in preparation for receiving an Isochronous Timestamp Packet (ITP);
the Host Controller sending a plurality of multicast periodic Isochronous Timestamp Packet to each of the Isochronous endpoints;
locking the respective local clock of the respective SuperSpeed USB device to information derived from the periodic Isochronous Timestamp Packet (ITP);
whereby the respective local clock of the respective SuperSpeed USB device is syntonised to the time domain of the Host Controller using the timestamp contained in the periodic Isochronous Timestamp Packets as a reference time and the respective local clock is synchronised or phase aligned using a propagation time of the Isochronous Timestamp Packets from the Host Controller to the respective SuperSpeed USB device.

The method may further comprise determining and compensating for phase errors of the respective local clocks of the respective SuperSpeed USB devices due to the relative propagation times of the Isochronous Timestamp Packets from the USB Host Controller or USB Hub to the respective SuperSpeed USB devices.

In a certain embodiment, the method comprises syntonising or frequency locking the respective local clock of each of the SuperSpeed USB devices using otherwise unused non-SuperSpeed signal conductors, comprising:
multiplexing additional synchronisation information onto High Speed USB D+ and D- data signalling lines at an upstream USB Host Controller or USB Hub;
demultiplexing the synchronisation information from the D+/D-signalling lines at the upstream port of the SuperSpeed USB device; and
locking the respective local clock of the respective SuperSpeed USB device to the synchronisation information.

The synchronization information may comprises a trigger signal, a clock signal and clock phase information.

According to this embodiment, the method may further comprise determining and compensating for phase errors in the respective local clock of the respective SuperSpeed USB devices due to relative propagation times of the synchronisation information from the USB Host Controller or USB Hub to each of the respective SuperSpeed USB devices.

In another embodiment, synchronising the respective local clocks of the non-SuperSpeed USB devices comprises:
monitoring USB data traffic local to the respective non-SuperSpeed USB devices;
decoding a plurality of periodic signal structures from the USB data stream;
locking the respective local clocks of the non-SuperSpeed USB devices to information derived from the periodic signal structures;
whereby the respective local clocks of the non-SuperSpeed USB device are syntonised to the time domain of the Host Controller using the periodic signal structures as a reference time and the local clock is synchronised or phase aligned using respective propagation times of the periodic signal structures from the Host Controller to the respective non-SuperSpeed USB devices.

The method may further comprise determining and compensating for phase errors in the respective local clocks of the non-SuperSpeed USB devices due to respective relative propagation times of the periodic signal structures from the USB Host Controller or USB Hub to the respective non-SuperSpeed USB devices.

The periodic signal structures may comprise USB Start of Frame packets.

In a particular embodiment, synchronising the SuperSpeed and non-SuperSpeed synchronisation channels comprises:
determining respective transmission times of respective first Isochronous data packets and Isochronous Timestamp Packets from the Host Controller to each of the respective SuperSpeed USB devices, in a time domain of the non-SuperSpeed synchronisation channels;
reporting the respective transmission times to the Host Controller; and
the Host Controller creating a mapping between respective time domains of the SuperSpeed USB devices and the time domain of the non-SuperSpeed USB devices; and
coordinating a respective local time of each of a plurality of operations or events of respective USB device function circuitry of the SuperSpeed USB device with a time domain of the Host Controller;
whereby each of the operations or events can be mapped back to the time domain of the non-SuperSpeed USB devices.

Isochronous transfers can be specified to begin in a particular USB Frame (or microframe). It will be apparent to those skilled in the art that the method of this aspect described above may include determining the transmission time (timestamp) of a plurality of Isochronous Timestamp Packets to each of the plurality of SuperSpeed USB devices, in the time domain of the non-SuperSpeed synchronisation channels, thereby providing more information as to the mapping between time domains. Furthermore statistical means may be employed to improve the accuracy of the mapping.

It will also be apparent to those skilled in the art that the plurality of non-SuperSpeed USB devices may contain both wired non-SuperSpeed USB devices or Wireless USB devices. In this case, a Start of Frame based synchronisation scheme (such as those of the background art described above) would be equally applicable and a Wireless USB may be used as a synchronisation channel for any of the non-SuperSpeed synchronisation channels taught in this disclosure.

The synchronisation or phase alignment of the local clock of the SuperSpeed USB device may be effected by utilising the USB device feature Set_Isochronous_Delay or by any other means of adjusting the phase of said local clock.

According a second broad aspect, the present invention provides a method of synchronising respective local clocks of a plurality of SuperSpeed USB devices and non-SuperSpeed USB devices in a USB network that comprises a plurality of USB Hubs, one or more SuperSpeed USB devices and one or more non-SuperSpeed USB devices, the method comprising:
determining a connection topology of the USB network;
establishing a non-SuperSpeed synchronisation channel at an uppermost USB Hub of the USB network;
identifying a respective highest USB Hub port in each network branch of the USB network that does not contain any non-SuperSpeed USB devices in its respective subnetwork, each respective highest USB Hub port being provided in a corresponding highest USB Hub of each of the network branches;
establishing respective SuperSpeed synchronisation channels from the respective highest USB Hub ports to each of the SuperSpeed USB devices that is attached thereto;
synchronising respective local clocks of the respective highest USB Hubs across their respective upstream non-SuperSpeed synchronisation channels;
synchronising the local clocks of the non-SuperSpeed USB devices across the respective non-SuperSpeed synchronisation channels; and
synchronising the local clocks of the respective SuperSpeed USB devices across the respective SuperSpeed synchronisation channels;
whereby the SuperSpeed synchronisation channels are synchronised to a notion of time of a corresponding, respective the highest USB Hub in its respective network branch, and respective local clocks of the highest USB Hubs are synchronised to the non-SuperSpeed synchronisation channel.

In one embodiment, the method comprises syntonising or frequency locking each of the respective local clocks of the SuperSpeed USB devices using otherwise unused non-SuperSpeed signal conductors comprising:
multiplexing additional synchronisation information onto High Speed USB D+ and D- data signalling lines at an upstream USB Host Controller or USB Hub;
demultiplexing the synchronisation information from the D+ and D- signalling lines at the upstream port of the SuperSpeed USB device; and
locking the respective local clock of the respective SuperSpeed USB device to the synchronisation information.

The method may further comprise determining and compensating for phase errors in the local clocks due to relative propagation times of the synchronisation information from the USB Host Controller or USB Hub to each of the plurality of USB devices.

The additional synchronisation information typically comprises clocking, absolute time reference and trigger signals.

Thus, this approach allows the provision of a synchronisation channel (including synchronous clocking, absolute time reference and trigger signals) to a SuperSpeed USB device across USB 2.0 conductors. The synchronisation channel provides a mechanism for vastly the range of a synchronous USB. Background art systems relied on transmission of Start of Frame (SOF) packets on High Speed USB 2.0, but such systems have a limited range. The USB 2.0 standard defines a tiered star topology with 5 layers of expansion through USB hubs, and a maximum cable length per layer of 5 m, hence a total distribution range of 25 m. This is due to the limited communication window for each device under the USB 2.0 protocol, in which there is a communication timeout period for all transactions and the Host Controller must receive a reply from the USB device within a certain period of time from transmission of a request by the Host. According to this aspect of the present invention, synchronisation is not realised by use of USB2 SOF packets. Rather, USB 2.0 communication to the USB device Is disabled and dedicated synchronisation information is multiplexed onto the disconnected USB2 conductors. The timeout limits with USB3 are in the order of milliseconds which provides a physical range on the order of tens of kilometres. For all intents and purposes, the physical extent of such a synchronisation channel is determined only by the choice of transport layer.

The USB cable may comprise a plurality of cable segments and a plurality of USB hubs in the downstream path to each of the plurality of USB devices.

The signalling lines are typically in the form of a conducting pair, and may comprise copper cables (which comply with the USB 3.0 specification). Alternatively the signalling lines may comprise hybrid cables with a copper conductor and an optical fibre conductor, or solely optical fibre conductors.

It will be apparent to those skilled in the art that other synchronisation information may also be transmitted across the USB D+/D- data signalling lines, and this embodiment does not limit the scope of the synchronisation information.

In one embodiment, the upstream connection point is a USB Hub that contains a plurality of the connection points for expansion of the USB. Preferably, the USB Hub contains a precision timing reference or a local clock synchronised to an external precision timing reference.

In another embodiment, the method includes generating the synchronisation information by circuitry at the USB Hub. The synchronisation information may be received by circuitry at the USB Hub from an external source, such as a Global Positioning System (GPS) referenced clock source, an atomic clock, an Ethernet (in the form of, for example, Network Time Protocol (NTP) or IEEE-1588 Precision Time Protocol (PTP)), a wireless synchronisation mechanism, a CompactPCI instrumentation system, a PXI instrumentation system, a VXI instrumentation system or another instrumentation system. In this way, the synchronisation channel is capable of providing a precision timing reference across a widely distributed network, accurate to an external reference clock.

In one embodiment, a synchronisation bridge (bridging between a plurality of busses) comprises a plug-in board to be used inside a personal computer system. In a further embodiment said synchronisation bridge comprises a plug-in board for an instrumentation system such as compactPCI, PXI, PXI-express, VXI, VME or other instrumentation system. Most notably in the case of PXI and PXI-express said synchronisation bridge would preferably be used in the slot 1 timing controller card slot to enable synchronisation across said PXI or PXI-express instrumentation chassis. Furthermore said synchronisation bridge may comprise circuitry to synchronise said SuperSpeed USB with a wireless network, either a Wireless USB network or another type of network using a variety of protocols.

In another embodiment said synchronisation bridge comprises a home entertainment system whereby audio and video streams are synchronised and distributed across a plurality of busses, for example SuperSpeed USB and Ethernet, most notably using Precision Time Protocol (PTP) or IEEE-1588. In this case, audio-visual information, for example for home theatre or gaming applications, is decoded by said bridge (or may also be decoded by another component and transferred to said bridge) for delivery across a plurality of synchronised networks. In a preferred embodiment, video streams are passed across said SuperSpeed USB that is synchronised to said Ethernet for delivery of said audio streams, although other embodiments will be evident to those skilled in the art.

The synchronisation information may be distributed in a time-domain multiplexed manner, wherein different elements of the synchronisation information occupy their own respective timeslots within a total communication bandwidth of the synchronisation channel. For example, a periodic clock carrier signal may occupy a first timeslot, an absolute time reference signal a second timeslot and trigger signals a third timeslot.

The synchronisation information may be in the form of differential signalling across the D+/D-data signalling lines.

Alternatively, the method may include providing the synchronisation information by single-ended signalling on the D+ and D- data signalling lines. In this embodiment, the method may include distributing the synchronisation information across the data signalling lines. For example, the method may include transmitting a clock carrier signal over a first of the data signalling lines and an absolute time reference signal and trigger signals over a second of the data signalling lines. It will be apparent to those skilled in the art that other configurations for transferring the synchronisation information across the data signalling lines are possible.

In one embodiment, the method comprises synchronising the local clocks of the non-SuperSpeed USB devices comprising:
monitoring USB data traffic local to each of the non-SuperSpeed USB device;
decoding a plurality of periodic signal structures from the USB data stream;
locking the respective local clocks of the non-SuperSpeed USB devices to information derived from the periodic signal structures;
whereby the respective local clocks of the non-SuperSpeed USB devices are syntonised to a time domain of the Host Controller using the periodic signal structures (preferably the USB Start of Frame packets) as a reference time and the local clocks of the non-SuperSpeed USB devices are synchronised or phase aligned using the respective propagation times of the periodic signal structures from the Host Controller.

The periodic signal structures may comprise USB Start of Frame packets.

The method may further comprise determining and compensating for phase errors in the local clocks of the non-SuperSpeed USB devices due to relative propagation times of the periodic signal structures from the USB Host Controller or USB Hub to the respective non-SuperSpeed USB devices.

In a particular embodiment, the method further comprises:
locking or syntonising the respective local clocks of the USB Hubs and the non-SuperSpeed USB devices to substantially the same frequency;
measuring respective roundtrip propagation times of non-SuperSpeed signals from the uppermost USB Hub to each of the highest USB Hubs and non-SuperSpeed USB devices;
determining respective downstream propagation times or relative downstream propagation times of non-SuperSpeed signals to each of the USB Hubs and non-SuperSpeed USB devices;
synchronising, or adjusting the phase of, each of the local clocks of the USB hubs and each of the local clocks of the non-SuperSpeed USB devices contained in the non-SuperSpeed synchronisation channel; and
providing each of the USB devices with a common notion of time.

The method may comprise syntonising or frequency locking the respective local clocks of the SuperSpeed USB devices to the highest most USB Hub using otherwise unused non-SuperSpeed signal conductors, comprising:
multiplexing additional synchronisation information onto High Speed USB D+ and D- data signalling lines at an upstream USB Host Controller or USB Hub;
demultiplexing the synchronisation information from the D+/D-signalling lines at the upstream port of the respective SuperSpeed USB devices;
locking the respective local clocks of the SuperSpeed USB devices to the synchronisation information,
wherein the additional synchronisation information is generated by the local clock of the uppermost USB Hub, thereby synchronising the respective local clocks of the SuperSpeed USB devices to a notion of time of the non-SuperSpeed synchronisation channels.

The method may further comprise determining and compensating for phase errors in the local clocks of the SuperSpeed USB devices due to relative propagation times of the additional synchronisation information from the respective highest USB Hub to the respective SuperSpeed USB devices.

According to a third broad aspect, the present invention provides a method for compensating cable-propagation-time induced phase offsets in a plurality of synchronised SuperSpeed USB devices, comprising:
establishing respective SuperSpeed communication channel connections from a USB Host to the respective SuperSpeed USB devices, each of the connections comprising a respective USB cable;
disabling or disconnecting USB2 D+/D- data signalling lines of the respective USB cables at upstream connection points of the respective USB cables;
multiplexing additional synchronisation information (such as clocking, absolute time reference and trigger signals) onto the D+/D- signalling lines at the upstream connection points;
demultiplexing the synchronisation information from the D+/D-data signalling lines at each of the USB devices;
transmitting propagation timing signals on the D+/D- data signalling lines to the USB devices;
receiving and decoding response signals from the USB devices generated in response to the propagation timing signals;
measuring respective time intervals between transmission of the propagation timing signals and reception of the response signals for each of the USB devices;
determining relative downstream propagation times for each of the USB devices;
designating one of the USB devices as a temporal reference device;
determining a respective difference between the relative downstream propagation time of the temporal reference device and each of the USB devices other than the temporal reference device;
syntonising or locking respective clocks local to the USB devices in frequency and phase to the synchronisation information;
determining respective phases of the local clocks with respect to the local clock of the temporal reference USB device;
determining respective temporal adjustments or phase shifts of the local clocks required to put the local clocks substantially in phase (noting that not all of the USB devices may be determined to require a temporal adjustment or phase shift);
transmitting the temporal adjustments or phase shifts (such as from a USB host) to the respective USB devices (noting that this may mean that some of the USB devices may not receive a temporal adjustment or phase shift, if no temporal adjustment or phase shift was determined as required in the previous step); and
phase adjusting the respective local clocks according to the respective temporal adjustment or phase shift transmitted thereto.

Thus, this aspect provides a time-delay-loop-back signal on the D+/D- data signalling lines.

Furthermore, the temporal adjustment is valid for compensating the cable-propagation-time for all of the synchronisation information. Therefore providing a generic phase adjustment for all of the synchronisation information allows synchronisation of clocking signals, absolute time reference signals, trigger signals and any other form of synchronisation information for each of the USB devices.

Each of the connections may comprise a plurality cable segments and a plurality of USB hubs in the downstream path to the respective USB devices.

The time interval comprises three components: a downstream propagation time, an upstream propagation time and a latency in the respective USB device due to generation of the response to the propagation timing signal. Signal propagation times across the USB cables may generally be treated as symmetrical and the latency should have a uniform value for all of the USB devices of like characteristics. The signal propagation times are therefore expected to be exactly half of the time interval for each of the USB devices, plus some constant value due to the latency. As a result, the constant latency cancels out when determining the relative downstream propagation times.

According to a fourth broad aspect, the present invention provides an apparatus for synchronising one or more SuperSpeed USB devices and one or more non-SuperSpeed USB devices in a USB network, comprising:
a USB Hub having a SuperSpeed USB upstream port;
a plurality of SuperSpeed USB downstream ports;
USB Hub function circuitry adapted to perform a USB 3.0 hub function that provides connectivity to the upstream port and to the plurality of downstream ports; and
at least one USB device function circuitry, the USB device function circuitry being connected to one of the downstream ports;
decoding circuitry for decoding periodic signal structures from a non-SuperSpeed USB data stream at the upstream port;
syntoniser circuitry adapted to syntonise a local clock of the apparatus to the periodic signal structures;
a synchroniser (such as in the form of synchronising circuitry) adapted to synchronise the local clock to an external notion of time (that is, external to the apparatus);
circuitry adapted to generate additional synchronisation information (such as clocking, absolute time reference and trigger signals) referenced to the local clock; and
circuitry operable to selectively disable downstream non-SuperSpeed D+/D-data signalling lines of each the downstream USB ports of the apparatus from their respective USB Hub Function downstream ports;
a multiplexer (such as in the form of multiplexing circuitry) for multiplexing the additional synchronisation information derived from the local clock onto the downstream D+/D-signalling lines at each of the plurality of downstream USB connectors, operable to direct the non-SuperSpeed USB D+/D- signals to any of the downstream USB Connectors with an attached non-SuperSpeed device and to direct the additional synchronisation information to any of the downstream USB Connectors that have an attached SuperSpeed USB device; and
a timer (such as in the form of timing circuitry) adapted to determine respective round-trip time intervals of signals from the apparatus to one or more attached downstream USB devices;
wherein the USB device function circuitry is adapted to transmit the round-trip time intervals determined by the timer to a USB Host Controller of the USB network.

Thus, an apparatus (such as in the form of a USB Hub) for synchronisation of a mixed SuperSpeed/non-SuperSpeed network is provided, which permits synchronous clocking and the provision of absolute time reference and trigger signals. The USB Host Controller is generally external to the apparatus but in some embodiment the apparatus comprises the USB Host Controller. For example, the apparatus-including USB Host Controller-may be manufactured onto a single chip.

Thus the present invention enables synchronisation of the local clock of each of a plurality of SuperSpeed USB devices using only a single cable. This involves using the standard USB3 compliant device sockets to allow seamless use with other conventional USB cables and devices. The USB3.0 Specification defines that when a SuperSpeed connection has been made to a USB3.0 device, the hub disables the USB2.0 signals to that device. The disclosed instrumentation bus architecture takes advantage of the unused signal wires in a USB3.0 cable when a SuperSpeed device connection has been made. This is equally applicable to any application requiring a synchronisation channel and USB SuperSpeed connectivity.

The apparatus may include circuitry for controlling the state of the multiplexer.

The timer may be adapted to employ different measurement techniques for SuperSpeed and non-SuperSpeed downstream devices. In one embodiment, the timer measures the round-trip time between the upstream port to each of the attached non-SuperSpeed USB devices. According to this embodiment, the timer measures the round trip time from the circuitry for generating timing signals to each of the attached SuperSpeed USB devices and back. The round-trip time may be measured according to any suitable method, including any of the round-trip measurement methods disclosed herein.

The USB device function circuitry may be adapted to perform a non-SuperSpeed device function.

In one embodiment, the USB device function circuitry is adapted to perform a SuperSpeed device function.

In one embodiment, the external notion of time may be provided by the USB Host Controller.

The synchroniser may also be adapted to syntonise the local clock to an external interface.

In one embodiment, the apparatus is adapted to receive the external notion of time from the external interface.

The external interface may comprise any one or more of a GPS clock, a PXI Chassis slot 1 timing controller, an Ethernet interface, an IEEE-1588 Precision Time Protocol Ethernet, a Network Time Protocol Ethernet, an atomic clock or an Inter-Range Instrumentation Group (IRIG) interface.

In a particular embodiment, the apparatus further comprises a USB Host Controller function, adapted to connect to the upstream port of the USB Hub.

In one embodiment, the syntoniser circuitry comprises:
circuitry for observing a USB data stream locally to respective connection points or downstream ports of any attached USB devices;
circuitry for decoding a periodic signal structure from the USB data stream;
circuitry for generating an event signal local to the apparatus corresponding to decoding the periodic data structure from the USB data stream;
circuitry for locking the frequency of the local clock with respect to the frequency of the event signal.

In a particular embodiment, the circuitry for observing the USB data stream is located at the upstream port.

Furthermore the apparatus may be disposed as a synchronisation bridge. In this configuration the local clock circuitry may be synchronised to an external reference clock and notion of time provided from outside the USB environment. The apparatus may also include a USB Host Controller having a clock, and circuitry that allows the clock of the Host Controller to be synchronised to an external reference clock.

In this embodiment, the external reference clock and associated notion of time (*viz.* the external source of time) may comprise a Global Positioning System (GPS) reference clock signal; an atomic clock signal; a synchronised USB; an Ethernet time code signal, such as but not limited to, an IEEE-1588 Precision Time Protocol (PTP) reference time signal, a Network Time Protocol (NTP) time signal or other Ethernet time reference; an Inter-Range Instrumentation Group (IRIG) reference time signal, or any other reference time signal. The external source of time may be received through electrical cables, through optical fibre, a wireless mechanism or any other signal transfer or transmission mechanism.

Thus, the present invention enables synchronisation of SuperSpeed connected USB devices with, for example, devices connected via Ethernet (using Network Time Protocol (NTP), the IEEE-1588 synchronisation protocol or any other time source), with devices connected via a PCI bus or a compact PCI bus, with devices connected via a PXI (or PXI-express) bus, with devices connected via a VXI or VME bus, with devices connected via wireless mechanisms including but not limited to Zigbee or Wireless USB, and devices connected across other communication busses.

The non-SuperSpeed USB devices may be High-Speed or Full-Speed devices and are preferably adapted to synchronise the local clocks to the USB SOF packet token. In one particular embodiment, the periodic signal structure comprises on or more OUT tokens, IN tokens, ACK tokens, NAK tokens, STALL tokens, PRE tokens, SOF tokens, SETUP tokens, DATA0 tokens, DATA1 tokens, or programmable sequences bit patterns in the USB data packets.

According to a fifth broad aspect, there is provided an apparatus for providing synchronisation signals to one or more SuperSpeed-connected USB devices, the apparatus comprising:
a USB Hub containing a SuperSpeed USB upstream port; and
a plurality of SuperSpeed USB downstream ports;
a clock or clock circuitry;
circuitry adapted to generate synchronisation information referenced to the local clock;
circuitry operable to multiplex the synchronisation information onto D+/D-signalling lines of a selected one or more of the downstream ports to which a USB device is attached and connected in SuperSpeed USB mode.

According to a sixth broad aspect, there is provided a method of synchronising a clock of a USB device connected in SuperSpeed mode to a clock of a USB Hub attached thereto, the method comprising:
generating synchronisation information from the clock of the USB Hub;
multiplexing the synchronisation information onto unused D+/D- signalling lines of a downstream port of the USB Hub to which the USB device is attached;
synchronising the clock of the USB device to the synchronisation information;
whereby the USB device is connected to and communicating with a Host Controller through the USB Hub using SuperSpeed USB protocol and simultaneously synchronised to a notion of time of the clock of the USB Hub.

The synchronisation information may comprises syntonisation information to which the clock of the USB Hub can be syntonised.

In one embodiment, the syntonisation information comprises a periodic signal, while in certain embodiments the synchronisation information contains a notion of time of the clock of the USB Hub. In a particular embodiment, the synchronisation information comprises one or more trigger signals.

In one embodiment, the method further comprises determining a signal propagation time from the USB Hub to the USB device.

The clock of the USB device may be phase adjusted according to the determination of signal propagation time.

According to a seventh broad aspect, there is provided a method of synchronising the phase of a SuperSpeed USB device and a non-SuperSpeed USB device of a common USB network, comprising:
syntonising a local clock of the non-SuperSpeed USB device with respect to a periodic start of frame packet;
syntonising a local clock of the SuperSpeed USB device with respect to a periodic Isochronous Timestamp Packet;
determining a non-SuperSpeed propagation time between a point substantially near the top of the USB network and the non-SuperSpeed USB device;
determining the SuperSpeed propagation time between a point substantially near the top of the USB network and the SuperSpeed USB device and back;
determining a difference between the SuperSpeed propagation time and the non-SuperSpeed propagation time; and
adjusting the phase of the local clocks according to the difference between the SuperSpeed and non-SuperSpeed propagation times.

The non-SuperSpeed propagation time may be determined, for example, as either a one way or round trip propagation time.

The SuperSpeed propagation time may be determined, for example, as either a one way or round trip propagation time (the latter being readily measured, the former being most readily determinable from the latter). It will be appreciated that, even if the non-SuperSpeed and SuperSpeed propagation times are determined according to different definitions, it is a straightforward matter to determine a difference between, such as by first doubling or halving one or the other of the two as appropriate.

In one embodiment, the method further comprises:
syntonising a local clock of a further non-SuperSpeed USB device with respect to a periodic start of frame packet;
determining a further non-SuperSpeed propagation time between a point substantially near the top of said USB network and said further non-SuperSpeed USB device;
determining a difference between said SuperSpeed propagation time and said further non-SuperSpeed propagation time; and
adjusting the phase of said local clock of said non-SuperSpeed USB device according to said difference between said SuperSpeed propagation time and further non-SuperSpeed propagation time.

In one embodiment, the method further comprises:
syntonising a local clock of a further SuperSpeed USB device with respect to a periodic start of frame packet;
determining a further SuperSpeed propagation time between a point substantially near the top of said USB network and said further SuperSpeed USB device;
determining a difference between said further SuperSpeed propagation time and said non-SuperSpeed propagation time; and
adjusting the phase of said local clock of said non-SuperSpeed USB device according to said difference between said further SuperSpeed propagation time and said non-SuperSpeed propagation time.

These last two described embodiments, if employed repeatedly, permit the synchronising of the phase of a plurality of SuperSpeed USB devices and/or a plurality of non-SuperSpeed USB device in the common USB network.

It should be noted that all the various features of each of the above aspects of the invention can be combined as suitable and desired.

Furthermore, it should be noted that the invention also provides apparatuses and systems arranged to perform each of the methods of the invention described above.

In addition, apparatuses according to the invention can be embodied in various ways. For example, such devices could be constructed in the form of multiple components on a printed circuit or printed wiring board, on a ceramic substrate or at the semiconductor level, that is, as a single silicon (or other semiconductor material) chip.

### BRIEF DESCRIPTION OF THE DRAWINGS

In order that the present invention may be more clearly ascertained, embodiments will now be described, by way of example, with reference to the accompanying drawing, in which:
Figure 1 is a schematic diagram of the dual-bus architecture of USB3 according to the background art;
Figure 2 is a schematic diagram of a synchronised USB according to an embodiment of the present invention, containing both SuperSpeed and non-SuperSpeed USB devices;
Figure 3 is a schematic diagram of the relative timing of periodic timing signals used for synchronisation of SuperSpeed and non-SuperSpeed USB devices of the synchronised USB of figure 3;
Figure 4A is a schematic diagram of a USB Timing Hub according to an embodiment of the present invention;
Figure 4B is a schematic diagram of a synchronised USB device according to an embodiment of the present invention;
Figure 5A is a schematic diagram of a particular state (in which a SuperSpeed synchronisation channel is provided) of a simplified version of the USB Timing Hub of Figure 4A;
Figure 5B is a schematic diagram of a particular state (in which a non-SuperSpeed synchronisation channel is provided) of a simplified version of the USB Timing Hub of Figure 4A;
Figure 6 is a schematic representation of a mixed SuperSpeed and non-SuperSpeed synchronised USB network according to an embodiment of the present invention; and
Figure 7 is a schematic timing diagram depicting the timing signals of a synchronised SuperSpeed and non-SuperSpeed USB device pair according to an embodiment of the present invention.

### DETAILED DESCRIPTION OF THE INVENTION

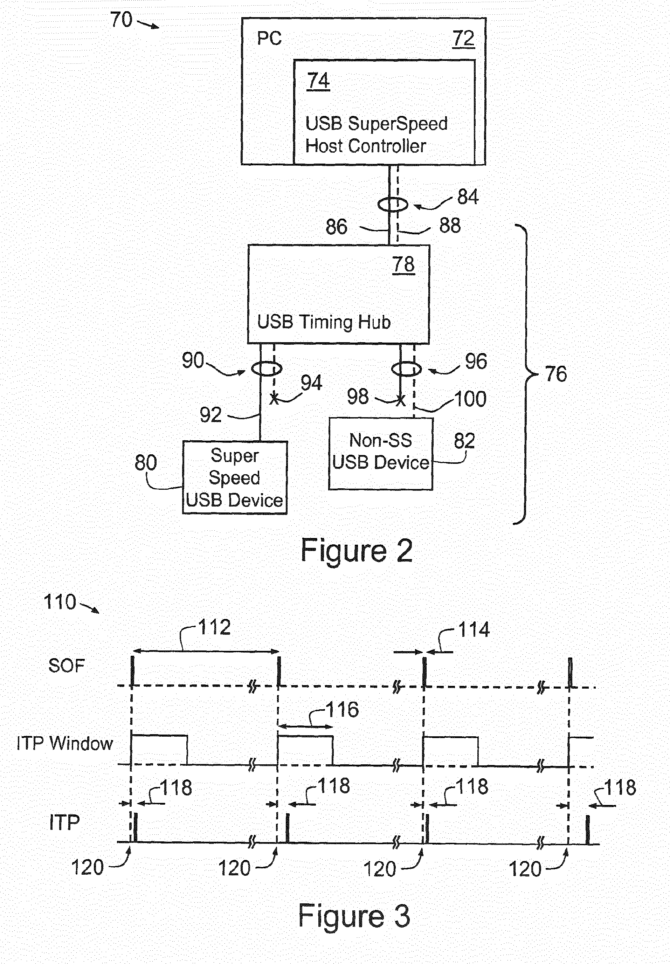

A synchronised USB according to a first embodiment of the present invention is shown schematically at 70 in figure 2, provided in a personal computer (PC) 72. PC 72 includes a SuperSpeed USB Host Controller 74 that is connected to a network 76 containing a SuperSpeed USB Timing Hub 78, a SuperSpeed USB device 80 and a non-SuperSpeed USB device 82. USB Host Controller 74 is connected to USB Timing Hub 78 by compound USB cable 84 comprising SuperSpeed conductors 86 and non-SuperSpeed conductors 88.

USB Timing Hub 78 supports attachment of both a SuperSpeed USB device 80 and non-SuperSpeed USB device 82, so both SuperSpeed conductors 86 and non-SuperSpeed conductors 88 carry signals between SuperSpeed USB Host Controller 74 and USB Timing Hub 78.

SuperSpeed USB device 80 is connected to USB Timing Hub 78 by SuperSpeed-compliant compound USB cable 90, comprising SuperSpeed conductors 92 and non-SuperSpeed conductors 94. As device USB 80 is a SuperSpeed USB device, USB Timing Hub 78 turns off non-SuperSpeed data traffic to conductors 94, so the connection between SuperSpeed device 80 and USB Timing Hub 78 is provided by SuperSpeed conductors 92 alone. Non-SuperSpeed USB device 82 is connected to USB Timing Hub 78 by SuperSpeed-compliant compound USB cable 96, comprising SuperSpeed conductors 98 and non-SuperSpeed conductors 100. There are no signals across the SuperSpeed USB conductors 98 of cable 96 while a data connection is being made to Non-SuperSpeed USB device 82 by the non-SuperSpeed conductors 100.

In this example, SuperSpeed conductors 92 (of compound USB cable 90) between USB Timing Hub 78 and SuperSpeed USB device 80 are adapted to provide a SuperSpeed synchronisation channel, whilst non-SuperSpeed cable segment 100 (of compound USB cable 96) between USB Timing Hub 78 and non-SuperSpeed USB device 82 can be said to provide a non-SuperSpeed synchronisation channel.

According to this embodiment, SuperSpeed USB device 80 is synchronised to non-SuperSpeed USB device 82. Frames in non-SuperSpeed USB traffic have a substantially constant phase relationship with the Isochronous SuperSpeed Timestamp packets. Figure 3 is a schematic representation of an exemplary timing diagram at 110 of timing signal traffic through USB Timing Hub 78 of figure 2 showing the relationships between timing signals of a SuperSpeed and non-SuperSpeed synchronisation channel.

Referring to figure 3, bus interval 112-defined as a 125 µs period-is common to both SuperSpeed and non-SuperSpeed busses. The typical periodic signal structure chosen for synchronisation of a non-SuperSpeed synchronisation channel is the Start of Frame (SOF) packet, which occurs once every bus interval at the bus interval boundary. There is a very tight tolerance 114 in transmission of a Start of Frame packet (see upper register of figure 3): Start of Frame packets must be transmitted within nanoseconds of the bus interval boundary.

By contrast, a SuperSpeed synchronisation channel has a very loose tolerance 116 on the Isochronous Timestamp Packet (ITP) Window (middle register of figure 3). The ITP Window allows transmission of an ITP anywhere in the region of 8 µs following a bus interval boundary. This results in significant timing jitter in transmission of the Isochronous Timestamp Packet (time elapsed 118 since respective bus interval boundary 120). The Isochronous Timestamp Packet (see lower register of figure 3) also contains a timestamp of the time elapsed from the bus interval boundary to the transmission of the Isochronous Timestamp Packet. This mechanism allows the attached USB device to keep track of the Host Controller time.

Nevertheless, the two time signatures predominantly used in this embodiment have a known phase relationship allowing accurate synchronisation of the SuperSpeed and non-SuperSpeed synchronisation channels.

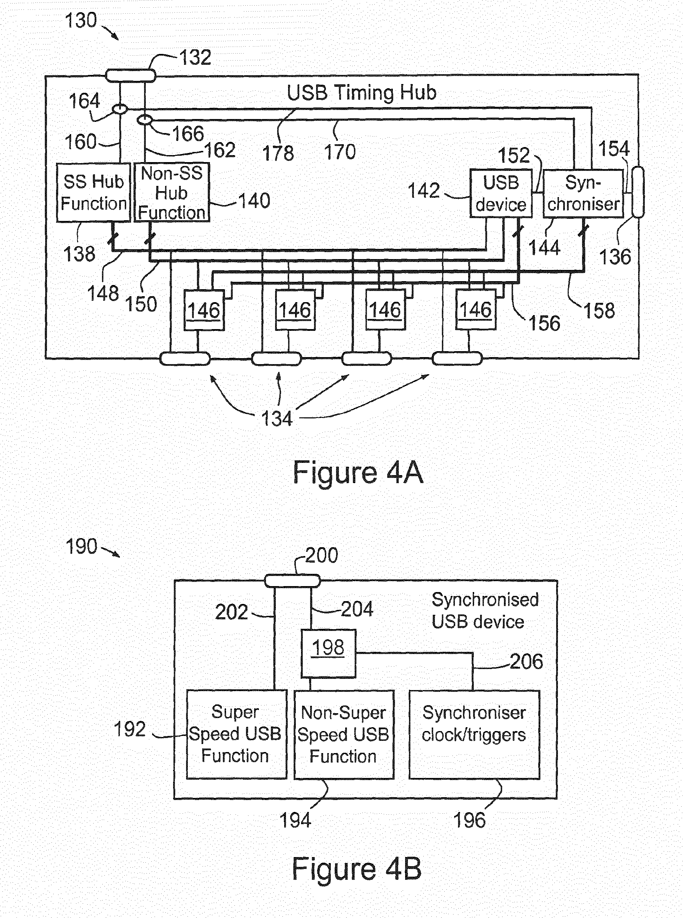

In another embodiment, the present invention provides a system for synchronising a plurality of SuperSpeed and non-SuperSpeed channels. Figure 4A is a schematic representation a SuperSpeed USB Timing Hub 130 according to this embodiment. USB Timing Hub 130 has an upstream port 132 for communicating with a USB Host Controller, a plurality of downstream ports 134 for communicating towards USB devices. Only four downstream ports 134 are shown for simplicity, but it should be understood that USB Timing Hub 130 may have more or fewer downstream ports. USB Timing Hub 130 also has an external timing port 136 for communicating timing information between USB Timing Hub 130 and an external timing device. Such an external timing device may be a synchronised instrumentation system, such as a PXI, PXI-express, Ethernet, LXI or VXI system, or any other system capable of providing or using timing information.

USB Timing Hub 130 has a SuperSpeed Hub function 138, a non-SuperSpeed Hub function 140, a USB device 142, a synchroniser 144 and a plurality of multiplexers 146. Optionally, SuperSpeed Hub function 138 and non-SuperSpeed Hub function 140 may be combined in a compound device.

USB device 142 may be either a SuperSpeed or a non-SuperSpeed USB device and is connected to a SuperSpeed Data Bus 148 and a Non-SuperSpeed Data Bus 150. Each downstream connection of SuperSpeed Hub function 138 and non-SuperSpeed Hub function 140 respectively (including the one that USB Device 142 is connected to) is a parallel connection and has only been depicted in figure 4A as a bus for clarity.

USB device 142 can be used to control certain parameters of synchroniser 144 through communication channel 152, in turn communicating timing information between an upstream USB Host Controller and the aforementioned external timing device connected to external timing port 136, via external timing channel 154 that couples synchroniser 144 and external timing port 136. A respective multiplexer 146 is allocated to each of external downstream USB ports 134, is controlled by USB Device 142 via a control bus 156 to either pass non-SuperSpeed communication 150 from non-SuperSpeed USB Hub 140 to each of downstream ports 134 or to instead pass timing information and signals (via a pass timing information and signals bus 158) from synchroniser 144 to each of downstream ports 134. Timing information and signals bus 158 provides a dedicated parallel connection to each multiplexer 146 and contains clock, trigger, loop-time measurement signals and a notion of time, among other timing information.

SuperSpeed Hub function 138 and non-SuperSpeed Hub function 140 are coupled to upstream port 132 by, respectively, first and second upstream channels 160, 162, which are provided with respective first and second detection points 164, 166. Synchroniser 144 observes SuperSpeed USB data traffic and non-SuperSpeed USB data traffic at detection points 164, 166 respectively via first and second channels 168, 170, so that synchroniser 144 can synchronise a local clock of synchroniser 144 (not shown) to the USB Host Controller's notion of time. Optionally, synchroniser 144 may observe only non-SuperSpeed USB data traffic (via second channel 170), which is certain to exist if USB Device 142 is a non-SuperSpeed device.

Synchroniser 144, furthermore, is able to adjust its notion of time by phase adjusting its local clock and absolute time registers based on a cascading synchronisation approach, being below a further SuperSpeed or non-SuperSpeed USB Timing Hub in the USB network tree.

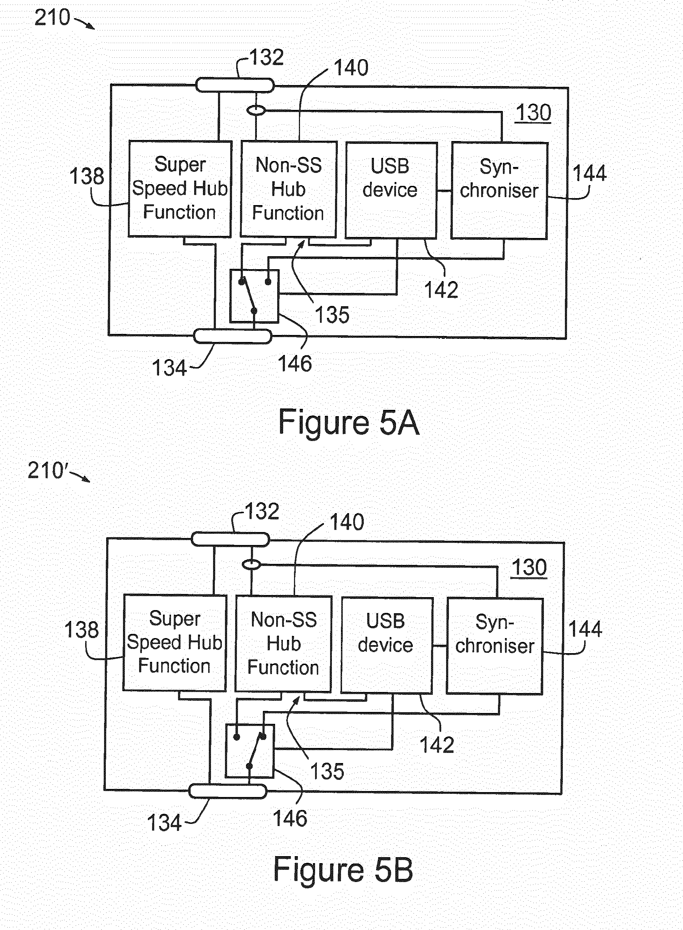

In a variant of this embodiment, synchroniser 144 is configured to detect non-SuperSpeed data streams at second detection point 166 and pass a direct copy downstream through an appropriately configured multiplexer 146 (configured as shown in figure 5B) to a downstream USB Device. This allows a USB device to communicate across a SuperSpeed communication channel and yet still receive periodic data structures on the non-SuperSpeed synchronisation channel. Furthermore, upstream signals from such an attached USB device would need to be routed through synchroniser 144 and back into the upstream signal path through second detection point 166 (possibly via an optional multiplexer - not shown - located at second detection point 166).

Figure 4B is a schematic view of a synchronised USB device 190 according to another embodiment of the present invention. Synchronised USB device 190 has a SuperSpeed USB Function 192, a non-SuperSpeed USB Function 194, a synchroniser 196 and a multiplexer 198.

Synchronised USB device 190 is connected to a USB (not shown) via connector 200. SuperSpeed USB Function 192 receives SuperSpeed Data Signals via a first channel 202 from connector 200, and receives non-SuperSpeed Data Signals from connector 200 pass along second channel 204 (comprising USB D+/D- signalling lines), via multiplexer 198, to non-SuperSpeed USB Function 194. Multiplexer 198 may also intercept non-SuperSpeed USB Signals on second channel 202 and route them via third channel 206 to synchroniser 196, to enable USB Device 190 as a synchronised USB device. Alternatively, multiplexer 198 may replicate non-SuperSpeed USB Data Signals on second channel 204 onto third channel 206, thereby allowing non-SuperSpeed USB Data Signals on second channel 204 to be received simultaneously by both non-SuperSpeed USB Function 194 and synchroniser 196.

In order to more clearly describe the operation of USB Timing Hub 130 of figure 4A, simplified examples of USB Timing Hub 130 are shown at 210 in figure 5A and at 210' in figure 5B. These figures depict only one representative downstream port 134 for simplicity (though plural downstream ports would typically be provided in practice), and the same reference numerals have been used as in figure 4A. USB device 142 is depicted, in these examples, as a non-SuperSpeed USB device, so is internally connected to a downstream port 135 of non-SuperSpeed USB Hub function 140. USB device 142 may be instead connected to SuperSpeed Hub Function 138 if desired. However, it is desirable to connect USB device 142 to non-SuperSpeed USB Hub Function 140 so that a non-SuperSpeed communication channel (and hence a synchronisation channel) will be maintained to USB Hub 130

Referring to figure 5A, in normal operation of downstream port 134, USB device 142 controls the state of multiplexer 146 which, as depicted in this figure, is configured to pass non-SuperSpeed USB data signals from non-SuperSpeed USB Hub function 140 to downstream port 134. Under normal conditions, both SuperSpeed and non-SuperSpeed signals are provided to downstream port 134 to allow connection of either a SuperSpeed or non-SuperSpeed device downstream.

Figure 5B is a schematic depicted of the configuration of USB Timing Hub 130 configured to provide a SuperSpeed synchronisation channel across the non-SuperSpeed USB D+/D- data signalling lines of a USB. This scenario will have been established by a SuperSpeed USB device (not shown), connected to and downstream of downstream port 134, requesting provision of such a synchronisation channel of the Host Controller, which in turn requests that USB device 142 establish this configuration for downstream port 134. Synchroniser 144 then has complete control of the downstream D+/D- data signalling lines to the attached, aforementioned SuperSpeed USB device. Synchroniser 144 is then able to transmit and receive from downstream port 143 via multiplexer 146 any combination of periodic clock carrier signals, dedicated clock signals, cable loop-time measurement signals, trigger signals, absolute time reference signals, data containing the absolute time of any given absolute time reference signal or any other signals required to synchronise the local clock or operation of the downstream SuperSpeed USB device to a notion of time derived from either the Host Controller or the external notion of time derived from external timing port 136 (see figure 4A).

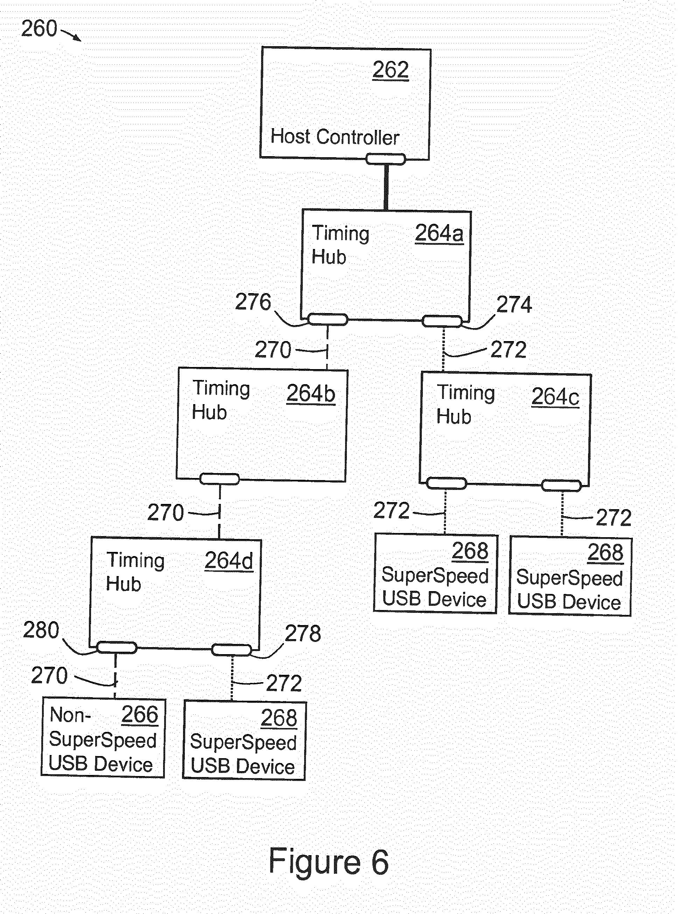

Figure 6 is a schematic representation of a mixed SuperSpeed and non-SuperSpeed synchronised USB network 260 according to a further embodiment of the present invention. USB network 260 includes a Host Controller 262, first, second, third and fourth USB Timing Hubs 264a, 264b, 264c and 264d, a non-SuperSpeed USB device 266 and a plurality of SuperSpeed USB devices 268.

The mixed device nature of USB network 260 means that non-SuperSpeed USB device 266 is synchronised across a non-SuperSpeed synchronisation channel 270 while SuperSpeed USB devices 268 are synchronised across SuperSpeed synchronisation channels 272. The network branch spanned by downstream Hub port 274 (of USB Timing Hub 264a) contains only SuperSpeed USB devices 268, so all synchronisation channels in this branch are SuperSpeed synchronisation channels 272. By contrast, the network branch spanned by downstream Hub port 276 (of USB Timing Hub 264a) contains both SuperSpeed and non-SuperSpeed USB devices. Downstream Hub port 276 therefore provides a non-SuperSpeed synchronisation channel, which becomes a SuperSpeed synchronisation channel further downstream at port 278 (of USB Timing Hub 264d) to the attached SuperSpeed USB device.

The network branch spanned by Hub port 274 (of USB Timing Hub 264a) may contain a non-SuperSpeed synchronisation channel, but the presence of only SuperSpeed USB devices in that branch allows a SuperSpeed synchronisation channel to be used.

It should be noted that the term 'uppermost USB Hub' (as used herein) in USB network 260 is the one at the top of the tree, *viz.* the USB Hub (not shown) in Host Controller 262.

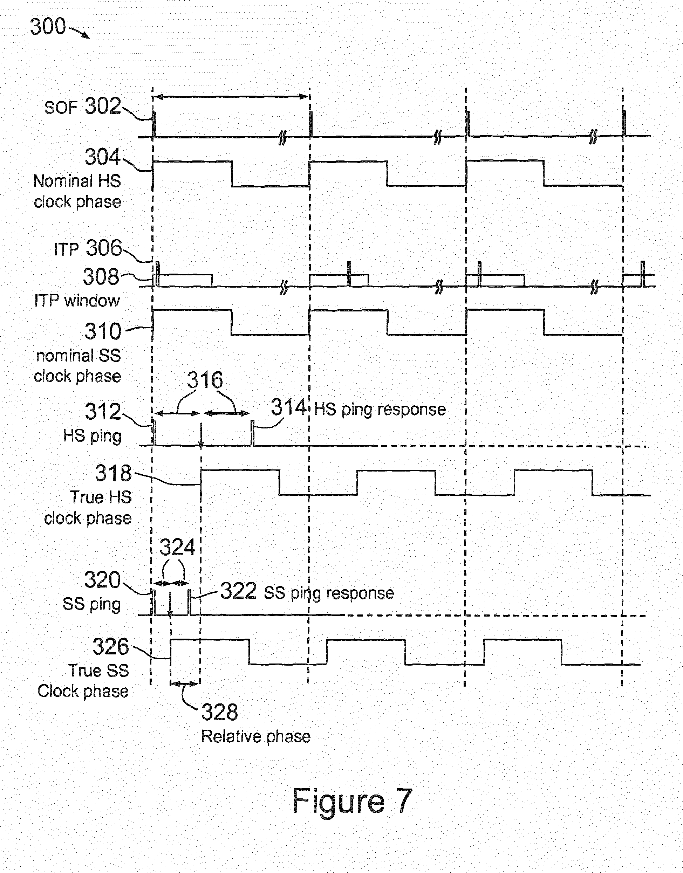

Figure 7 is a schematic timing diagram 300 depicting the timing signals of a synchronised SuperSpeed and non-SuperSpeed USB device pair according to an embodiment of the present invention.

A non-SuperSpeed Start of Frame packet 302 is used as the syntonisation reference for a non-SuperSpeed (or 'HS') device with the nominal clock phase 304 of the non-SuperSpeed USB device. It will be noted that the up edge of the clock pulse 304 is in phase with Start of Frame packet 302.

Similarly, a SuperSpeed Isochronous Timestamp Packet ('ITP') 306, which can be delivered to a SuperSpeed USB device anywhere within an ITP Window 308, provides a timestamp for syntonisation reference; this timestamp is synchronous with Start of Frame packet 302. The SuperSpeed (or 'SS') USB device has a nominal clock phase 310.

There will be uncertainty in the phase of the clock signals, however, due to propagation time differences between SOF and ITP packets. In a nominal sense, they will both be phase aligned to the time of reception of their respective reference signals.

Non-SuperSpeed USB device signal propagation time is determined by a Host Controller sending a HS ping 312 message to the non-SuperSpeed USB device and measuring the total time delay between transmission of HS ping 312 and reception of a (HS) response signal 314. The one-way propagation time is shown at 316; the true phase of the non-SuperSpeed syntonised clock is shown at 318, relative to a SOF packet.

Similarly for the SuperSpeed USB device, a SS ping 320 and respective response 322 indicate a one way propagation time shown at 324. The true phase of the SuperSpeed syntonised clock is then shown at 326 with a phase difference between SuperSpeed and non-SuperSpeed USB devices shown at 328. Knowledge of these two time domains and the relative phase allows accurate phase synchronisation of SuperSpeed and non-SuperSpeed USB devices.

Modifications within the scope of the invention may be readily effected by those skilled in the art. It is to be understood, therefore, that this invention is not limited to the particular embodiments described by way of example hereinabove and that combinations of the various embodiments described herein are readily apparent to those skilled in the art.

In the preceding description of the invention and in the claims that follow, except where the context requires otherwise owing to express language or necessary implication, the expression "Host Controller" embraces all forms of USB Host Controller, including standard USB Host controllers, USB-on-the-go Host Controllers and wireless USB Host Controllers.

In the preceding description of the invention and in the claims that follow, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments of the invention.

Further, any reference herein to background art is not intended to imply that such background art forms or formed a part of the common general knowledge in any country.

## Claims

1. A method of synchronising the operation of a plurality of SuperSpeed USB devices and a plurality of non-SuperSpeed USB devices, comprising:
establishing a SuperSpeed synchronisation channel for each of said plurality of SuperSpeed USB devices;
establishing a non-SuperSpeed synchronisation channel for each of said plurality of non-SuperSpeed USB devices;
synchronising a respective local clock of each of said plurality of SuperSpeed USB devices;
synchronising a respective local clock of each of said plurality of non-SuperSpeed USB devices; and
synchronising said SuperSpeed and non-SuperSpeed synchronisation channels so that said SuperSpeed and non-SuperSpeed devices can operate in synchrony, further comprising syntonising or frequency locking said local clocks of each of said SuperSpeed USB devices using an Isochronous transfer method, said Isochronous transfer method comprising:
opening at least one Isochronous communication pipe between said Host Controller and said respective SuperSpeed USB device;
ensuring that said respective SuperSpeed USB device is in link state U0 in preparation for receiving an Isochronous Timestamp Packet (ITP);
said Host Controller sending a plurality of multicast periodic Isochronous Timestamp Packet to each of said Isochronous endpoints;
locking the respective local clock of said respective SuperSpeed USB device to information derived from said periodic Isochronous Timestamp Packet (ITP);
whereby the respective local clock of said respective SuperSpeed USB device is syntonised to the time domain of said Host Controller using the timestamp contained in said periodic Isochronous Timestamp Packets as a reference time and said respective local clock is synchronised or phase aligned using a propagation time of said Isochronous Timestamp Packets from said Host Controller to said respective SuperSpeed USB device.

2. A method as claimed in claim 1, further comprising:
determining and compensating for phase errors of said respective local clocks of said respective SuperSpeed USB devices due to the relative propagation times of said Isochronous Timestamp Packets from said USB Host Controller or USB Hub to said respective SuperSpeed USB devices.

3. A method as claimed in claim 1, wherein synchronising the respective local clocks of said non-SuperSpeed USB devices comprises:
monitoring USB data traffic local to said respective non-SuperSpeed USB devices;
decoding a plurality of periodic signal structures from said USB data stream;
locking said respective local clocks of said non-SuperSpeed USB devices to information derived from said periodic signal structures;
whereby said respective local clocks of said non-SuperSpeed USB device are syntonised to the time domain of said Host Controller using said periodic signal structures as a reference time and said local clock is synchronised or phase aligned using respective propagation times of said periodic signal structures from said Host Controller to said respective non-SuperSpeed USB devices.

4. A method as claimed in claim 3, further comprising:
determining and compensating for phase errors in said respective local clocks of said non-SuperSpeed USB devices due to respective relative propagation times of said periodic signal structures from said USB Host Controller or USB Hub to said respective non-SuperSpeed USB devices.

5. A method as claimed in either claim 3 or 4, wherein said periodic signal structures comprise USB Start of Frame packets.

6. A method as claimed in any one of claims 1 to 5, wherein synchronising said SuperSpeed and non-SuperSpeed synchronisation channels comprises:
determining respective transmission times of respective first Isochronous data packets and Isochronous Timestamp Packets from said Host Controller to each of said respective SuperSpeed USB devices, in a time domain of said non-SuperSpeed synchronisation channels;
reporting said respective transmission times to said Host Controller; and
said Host Controller creating a mapping between respective time domains of said SuperSpeed USB devices and the time domain of said non-SuperSpeed USB devices; and
coordinating a respective local time of each of a plurality of operations or events of respective USB device function circuitry of said SuperSpeed USB device with a time domain of said Host Controller;
whereby each of said operations or events can be mapped back to the time domain of said non-SuperSpeed USB devices.

7. A method as claimed in claim 1, further comprising
determining a non-SuperSpeed propagation time between a point substantially near the top of said USB network and one of said non-SuperSpeed USB devices;
determining a SuperSpeed propagation time between a point substantially near the top of said USB network and one of said SuperSpeed USB devices;
determining a difference between said SuperSpeed propagation time and said non-SuperSpeed propagation time; and
adjusting the phase of said local clocks according to said difference between said SuperSpeed and non-SuperSpeed propagation times.

8. A method as claimed in claim 7, wherein said non-SuperSpeed propagation time is determined as either a one way or round trip propagation time.

9. A method as claimed in either claim 7 or 8, wherein said SuperSpeed propagation time is determined as either a one way or round trip propagation time.

10. A method as claimed in any one of claims 7 to 9, further comprising:
determining a further non-SuperSpeed propagation time between a point substantially near the top of said USB network and a further non-SuperSpeed USB device;
determining a difference between said SuperSpeed propagation time and said further non-SuperSpeed propagation time; and
adjusting the phase of said local clock of said further non-SuperSpeed USB device according to said difference between said SuperSpeed propagation time and further non-SuperSpeed propagation time.

11. A method as claimed in any one of claims 7 to 10, further comprising:
determining a further SuperSpeed propagation time between a point substantially near the top of said USB network and a further SuperSpeed USB device;
determining a difference between said further SuperSpeed propagation time and said non-SuperSpeed propagation time; and
adjusting the phase of said local clock of said further SuperSpeed USB device according to said difference between said further SuperSpeed propagation time and said non-SuperSpeed propagation time.
